Europäisches Patentamt

European Patent Office

Office européen des brevets

(11) Publication number: **0 323 519 B1**

# EUROPEAN PATENT SPECIFICATION

(45) Date of publication of patent specification: **19.05.93**    (51) Int. Cl.⁵: **B60C 11/00**, B60C 3/04

(21) Application number: **88906050.5**

(22) Date of filing: **28.06.88**

(86) International application number:
**PCT/JP88/00649**

(87) International publication number:
**WO 89/00113 (12.01.89 89/02)**

(54) **PNEUMATIC TIRE.**

(30) Priority: **08.07.87 JP 171975/87**

(43) Date of publication of application:
**12.07.89 Bulletin 89/28**

(45) Publication of the grant of the patent:
**19.05.93 Bulletin 93/20**

(84) Designated Contracting States:
**DE FR GB IT**

(56) References cited:
**EP-A- 0 269 301**
**DE-A- 3 411 667**
**JP-A- 5 959 505**
**JP-A- 54 159 902**

(73) Proprietor: **SUMITOMO RUBBER INDUSTRIES, CO. LTD**
**No. 1-1, Tsutsui-cho 1-chome**
**Chuo-ku Kobe-shi Hyogo-ken 651(JP)**

(72) Inventor: **ASANO, Kazuo**
**1, Hiyodoridai 1-chome Kita-ku**
**Kobe-shi Hyogo 651-11(JP)**

(74) Representative: **Stewart, Charles Geoffrey**
**SP TYRES UK LIMITED Tyre Technical Division**
**Fort Dunlop Birmingham B24 9OT (GB)**

# Description

The present invention relates to a pneumatic tyre and more particularly to an improvement in the shape of the ground contact face capable of extending the life of the tread by evening the distribution of ground pressure on the ground contact face to prevent partial slip on the ground face, thereby preventing uneven wear.

Because of the spread of expressway networks and speedup of cars, various researches and developments have been made on tyres in order to improve their performance including durability in high speed driving, wet grip properties, steering stability, and wear resistance. Insufficient consideration has been given to the shape of the ground contact face itself where the tread face of a tyre contacts with the road. The shape of the ground contact face means the contour shape of the portion where the tread face contacts the road under the standard conditions in which the tyre is assembled on its regular rim and inflated to its rated internal pressure and a standard load is applied on the tyre.

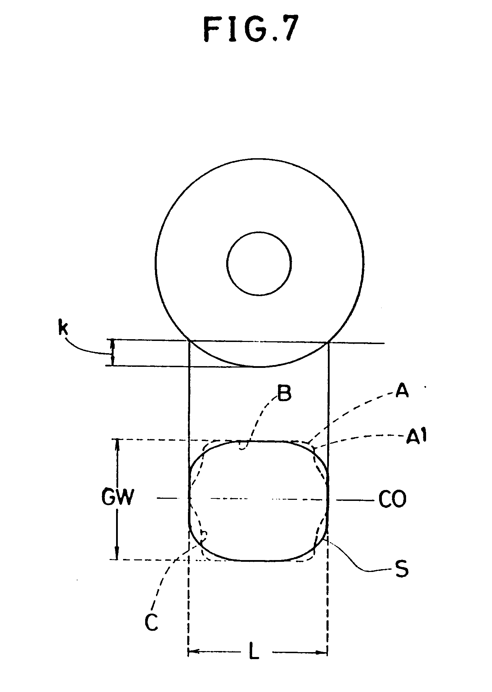

In a tyre, even if it is a latest generation tyre developed according to the new technology, the ground contact face shape A tends to become, for example, a butterfly shape A1 in which, as shown by a broken line in Fig. 7, the almost rectangular base part B has, on both sides thereof in the circumferential direction of the tyre, protruding parts C extending along the equator CO.

Aside from the above butterfly shape A, the shape of the ground contact face may be in a bat shape A2, a spool shape A3, a TSUZUMI shape A4, a MULURA shape A5, a MAYU shape A6, an octagonal shape A7 and a round shape A8. Here, shapes A1 and A2 are collectively named convex shape A4, shapes A3, A4, A5 and A6 are concave shape AB, and shapes A7 and A8 are hexagonal shape AC.

On the other hand, the shape of the ground contact face is under the control of the distribution of ground pressure in the ground contact face.

The fact that the shape has some protruding parts in the circumferential direction of the tyre, for example, the protruded parts C in Fig.7 usually means that the ground pressure is large in the protruded parts, and that the ground pressure of the tyre with a ground contact face in such a shape is distributed unevenly.

When the distribution of the ground pressure is uneven, partial slip may easily occur between the tread surface and the road surface, which causes uneven wear such as shoulder wear or rib punching. As a result, the performance including the life of the tread, wet grip performance and steering stability are lowered.

Moreover since the tyres are installed with inclinations such as toe in, the shape of the ground contact face soon develops into a polygonal shape due to abrasion, and that worsens the ride comfort.

In order to prevent uneven wear, various means have been tried, for example, lowering the tyre aspect ratio, flattening the tread surface providing a single radius of curvature on the tread surface, or stiffening the tread rubber. In spite of such efforts, however, the problems caused by the butterfly shaped ground contact face have not been solved.

European Patent Publication No 0269301 discloses a passenger car radial tyre having all of the features of the preamble of claim 1 in which noise is reduced whilst maintaining wear characteristics and running stability.

As a result of a comprehensive analysis of the relation between the ground contact face shape, ground pressure distribution and abrasion, it was found that the distribution of the ground pressure and of the slip in the ground contact face could be evened out effectively by designing the shape of the ground contact surface to be closer to a slice cut shape S which is obtained, as shown in Fig.7, by cutting an unloaded tyre under the standard condition where the tyre is mounted on its regular rim and inflated to its rated internal pressure, at a position remote from the circumferential surface of the tyre by a distance K corresponding to the depth of deflection or sink when the standard load is applied to the tyre.

In other words, the fact that the shape of the ground contact face differs from such a slice cut shape means an uneven distribution of the ground pressure, and such an uneven distribution of ground contact face may cause uneven slip and uneven wear, and therefore the life of the tread is shortened.

A great deal of effort has been made to make the shape of the ground contact face closer to the slice cut shape, and it was found that the shape of the ground contact face was affected by the profile of the tread by 70%, the thickness distribution of tread rubber by 25%, and the carcass profile by 5%. The present invention is based on this fact.

It is an object of the present invention to provide a pneumatic tyre, in which, by designing the shape of the ground contact face to be similar to the slice cut shape, the distribution of the ground contact pressure, that is, the amount of slip is made even, and hence uneven wear is prevented, and wet grip properties and ride comfort are also improved.

Accordingly the pneumatic tyre of the present invention comprises a tread portion, a pair of bead portions and a pair of sidewall portions between said tread portion and said bead portions, and comprises a pair of bead cores disposed in said bead portions, a carcass turned up at both edges thereof around said bead cores to be secured thereto, and a belt disposed radially outside said carcass in the tread portion, the tread portion having a first tread face radius which is defined as the radius of an arc passing through a centre point defined as the intersection of the tread face with the equator of the tyre, and two closer points defined as points on the tread face spaced from said centre point by a first distance on each side of the centre point in the axial direction of the tyre, a second tread face radius which is defined as the radius of an arc passing through said centre point and two distant points defined as points on the tread face spaced from said centre points by a second distance on each side of the centre point in the axial direction of the tyre, and a tyre width defined as the maximum sectional width at the sidewall portions characterised in that the first distance is one quarter of the ground contacting width and the second distance is half of the ground contacting width and the sidewalls are arranged so that they satisfy the relation of $L1 \geq F1 \geq L2$ where

$L1 = F2 \times 4.3 - 2.46$
$L2 = F2 \times 2.2 - 0.95$

and
F1 is the ratio of said first tread face radius to said tyre width, and
F2 is the ratio of said second tread face radius to said tyre width.

An embodiment will now be described in conjunction with the drawings in which:

Fig.1 is a sectional view showing an embodiment of the present invention;

Fig.2 is a diagram explaining the tread face radius;

Fig.3, is a diagram explaining the range of tread face radius in the present invention

Fig.4 and Fig 5 are diagrams showing the relation between the thickness of the tread and the shape of ground contact face,

Fig.6 is a diagram showing the relationship between the ground contact face shape and a ground contact coefficient (SF) and the ratio (W/WT) of the tyre width (W) to the nominal tyre width (WT) in the tyre size designation, and

Fig.7, is a diagram explaining the ground contact face shape.

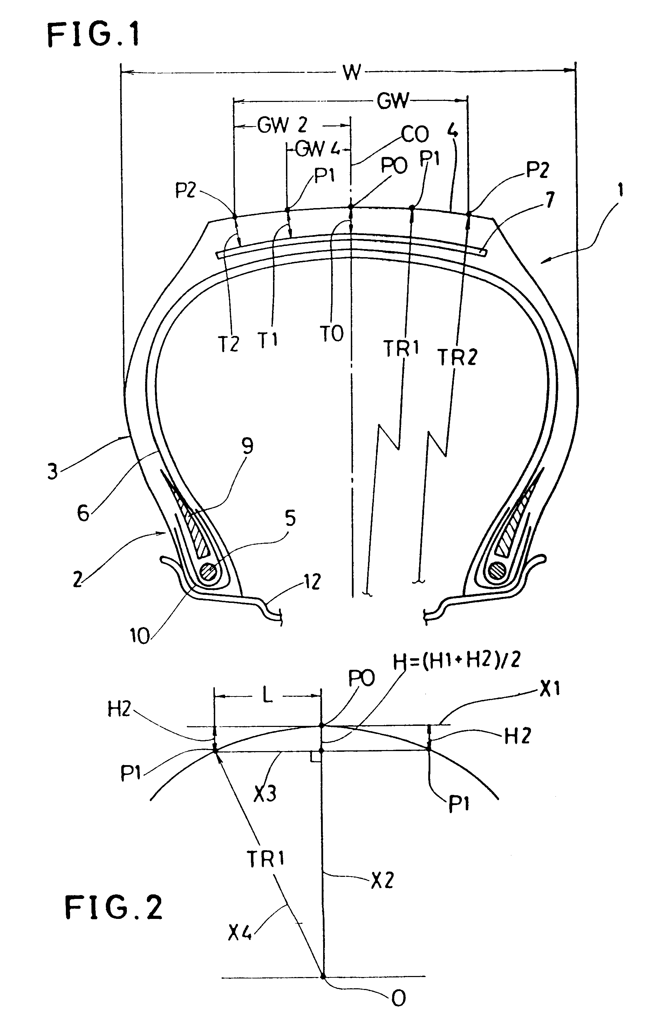

In Fig. 1, a pneumatic tyre 1 has a pair of bead portions 2, a pair of sidewall portions 3, and a tread portion 4.

Each bead portion 2 is provided with a bead core 5, around which both the edges of a carcass 6 passing through the sidewall portions 3 and the tread portion 4 are turned up.

The carcass 6 has at least one ply of radially arranged cords, and these carcass cords are arranged at 60 to 90 degrees to the tyre equator CO.

For the carcass cords, metal cords such as steel cords or organic fibre cords such as rayon, nylon, polyester, aromatic polyamide or the like, may be used.

The tread portion 4 is provided with a belt 7 radially outside the carcass 6. The belt 7 comprises at least one ply of cords arranged at a relatively small angle with respect to the tyre equator CO. For those belt cords, steel cords, organic fibre cords or the like may be used in the same way as for the carcass cords.

The pneumatic tyre of this invention comprises other normally used components, for example, a bead apex 9 extending radially outwardly from the bead core and a bead reinforcing layer 10 as shown in Fig.1.

The pneumatic tyre 1 is mounted on a regular rim approved for the tyre according to the tyre size and type thereof, and is inflated at its rated internal pressure. Under this standard condition, the tyre has a configuration such that the ratio F1 (F1 = TR1/W) of a first tread face radius TR1 to the tyre width W, where the first tread face radius TR1 is defined as the radius of the circle which passes through a centre point PO defined as the point of intersection of the tread face, that is, the outer surface of the tread, and the tyre equator CO, and two closer points P1 defined as points on the tread face one on each side of the centre point PO spaced therefrom by a distance of one fourth of the ground contacting width GW in the axial direction of the tyre, and

the ratio F2 (F2 = TR2/W) of a second tread face radius TR2 to the tyre width W, where the second tread face radius RE2 is defined as the radius of the circle which passes through the centre point PO and two distant points P2 defined as points on the tread face one on each side of the centre point PO spaced therefrom by a distance of a half of the ground contacting width GW in than axial direction of the tyre.

satisfy the relation

$L1 \geq F1$

where L1 is the upper limit, which is defined as

$L1 = F2 \times 4.3 - 2.46.$

Furthermore, the ratio F1 )F1 = TR1/W) satisfies the relation

$F1 \geq L2$

where L2 is the lower limit, which is defined as (F2 x 2.2 − 0.95)
or 1.40, whichever is the greater.

The first and second tread face radii TR1 and TR2 can be obtained by a method called the three point method explained below.

The three point method is to obtain the radius of a circle passing through three points on a curved line being an arc or almost an arc.

In Fig. 2, this method is explained for an example to obtain the first tread face radius TR1 from the centre point POI and the close points P1.

Firstly, distances H1 and H2 from the close points P1 to a line X1 which contacts the tread surface at the centre point PO are determined, and their mean value H is obtained.

Then according to the mean value H and the distance L (1/4) of the ground contact width) from the centre point PO to the close point P1 the tread face radius is obtained by calculating the equation

$$TR1^2 = (L^2 + H^2)/2H \quad (1)$$

The reason why the mean value H of the distances H1 and H2 is used is that an asymmetric tread face is taken into consideration, and such a tread face is also included in the scope of this invention.

Meanwhile, the equation (1) was deducted from the equation

$$TR1^2 = L^2 + (TR1 − H)^2 \quad (2)$$

which is substantially established from the right triangle formed by a line X2 connecting the centre point PO and the centre 0 of the first tread face radius TR1, a line X3 drawn perpendicularly from the close point P1 to the line X2, and a line X4 connecting the close point P1 and the centre 0.

In this way, by the calculation of the distance H, the first tread face TR1 is obtained. The second tread face radius TR2 is also obtained in the same way.

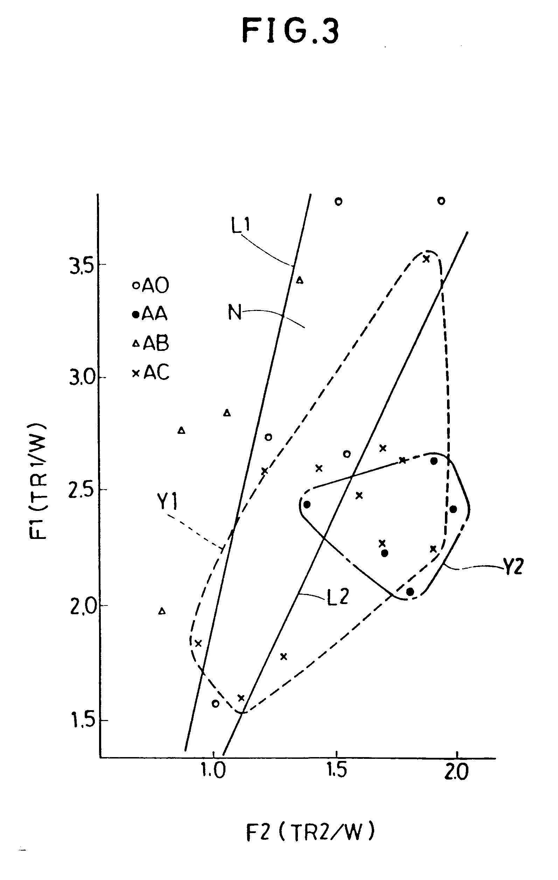

The range of the ratio F1 of the first tread face radius TR1 to the tyre width W is determined as stated above on the basis of the experimental data shown in Fig. 3.

In this experiment, 25 types of tyre were manufactured with different factors, and the tread face radii TR1 and TR2 were obtained by the three point method for each tyre. The shape of the ground contact face under regular tyre pressure was measured.

Fig.3, shows the results expressing the value F1 along the axis of ordinates and the value F2 along the axis of absicissas. As apparent from this diagram, the preferred shape of the ground contact face A0 which is close to the slice cut shape S, exists in the range N which is defined between lines 11 and 12.

On the line L1,

$$F1 = F2 \times 4.3 − 2.46 \quad (3)$$

is established and on the line L2,

$$F2 = F2 \times 2.2 − 0.95 \quad (4)$$

is established.

The preferred shape A0 of the ground contact face can be obtained only in thus range N, and the quotient of the first tread face radius TR2 and the tyre width W, that is, the ratio F1 is thus set in the range from an upper limit L1 to a lower limit L2, in relation to the quotient of the second tread face radius TR2 by the tyre width W, that is, in relation to the ratio F2.

Such a preferable result can be expected in a tyre having the ratio F1 of 1.40 or larger, and it is hence desired to determine the lower limit L1 according to the value 1.40.

It is also known from Fig.3 that the ground contact face tends to be

(a) in a concave shape AB or a hexagonal shape AC when the tread face radius exists in the range on the left of the upper limit L1, and

(b) in a convex shape A4 when existing in the range on the right of the lower limit L2.

Fig. 3 further shows that the range N overlaps with the range Y1 where the ground contact face presents a hexagonal shape AC and with the range Y2 where it presents a convex shape A4, and accordingly some of the tyres in the range N form such shapes AC and A4, but the diagram simultaneously shows that the preferable shape A0 apparently exists only in the range N.

In this way, in the pneumatic tyre 1, by employing such a double radius tread face and setting the tread face radii in the range N, the desirable ground contact face shape A0 closer to the slice cut shape S can be obtained, and as a result, the slip evened out together with the distribution of ground contact pressure and so uneven wear is reduced to prevent shortening of the tread life, and also to prevent loss of wet grip performance.

Moreover the tread rubber disposed between the tread face and the radially outer surface of the belt 7 has its thickness set so that (a) the ratio T0/T1 of the thickness T0 at the centre point P0 to the thickness T1 at the closest points P1 is in the range of 0.95 and 1.05, and

(b) the ratio T2/T1 of the thickness T2 at the distance points P2 to the thickness T1 is in the range of 0.85 and 1.05.

Here, the rubber thickness is defined as the length of the normal line drawn from the position concerned on the tread face to the outer surface of the belt, and when the belt 7 comprises several plies, it is defined as the distance to the outer surface of the innermost ply i.e. closest to the carcass 6.

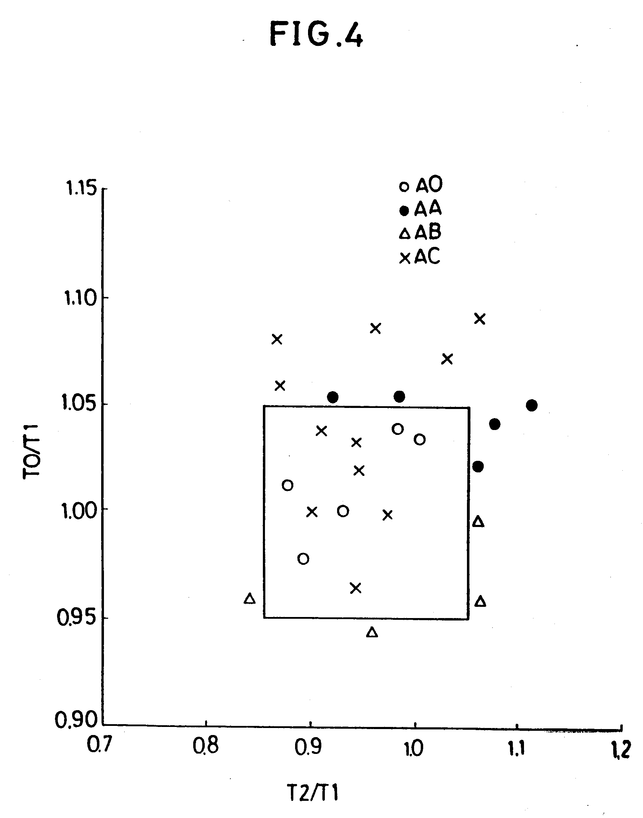

The reason why the ratios (T0/T1) of the thickness are chosen is that the convex shape A4 and concave shape AB included in the range N in Fig 3 are thus excluded (range M in Fig 4).

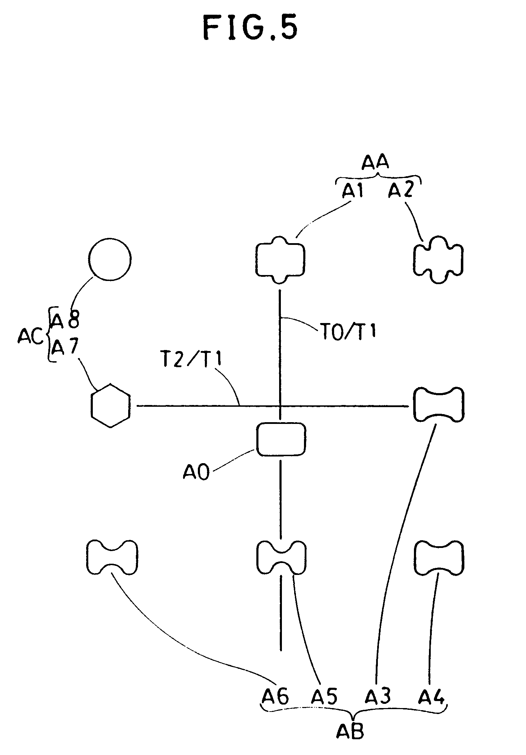

Fig. 5 shows qualitively the shapes A1 to A8 which occur when the ratio is outside the range M.

Additionally, the ratio W/WT of the tyre width W which is defined as the maximum sectional width to the nominal width WT of the tyre in its tyre size designation is set between 0.97 and 1.03, more preferably betwen 0.97 and 1.0.

The range is determined because the hexagonal shape AC tends to be formed when the ratio W/WT is larger than 1.03, that is, when the tyre width W exceeds 1.03 times of the nominal width WT, and accordingly, it is possible to exclude such tyre having hexagonal shape AC which is in the range N in Fig.3.

Then again when the ratio W/WT is less than 0.97, the convex shape A4 tends to be produced.

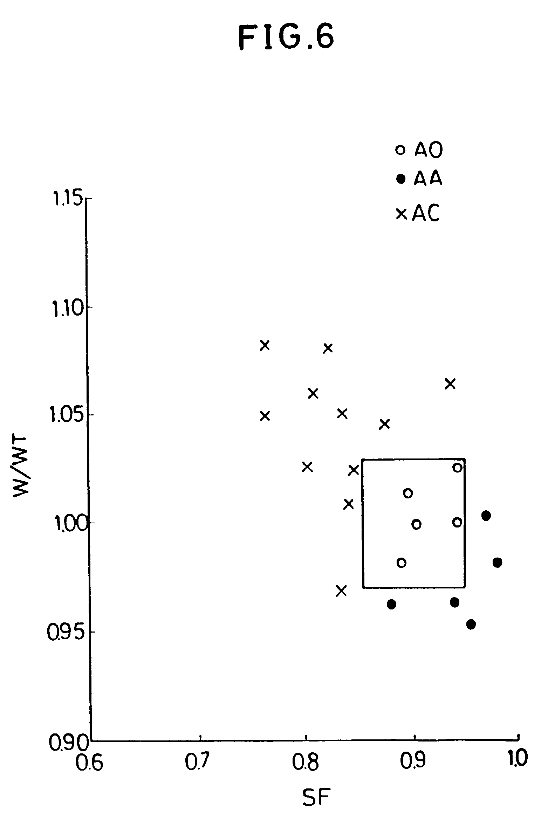

In Fig.6, the axis of the coordinates denotes the ratio W/WT and the axis of the absicissas is a ground contact coefficient SF.

The ground contact coefficient SF is expressed by the ratio SA/GW x L) of the real ground contact areas SA (the area of the ground contact face) to the nominal ground contact area (See Fig.7) expressed by the product GW x L of the ground contact width GW (the width of the ground contact face in the axial direction of the tyre) and the ground contact length L (the length of the ground contact face in the circumferential direction of the tyre).

The ground contact face coefficient SF of the tyre is set between 0.85 and 0.95. This is because the ground contact face tends to have a hexagonal shape AC when the coefficient is less than 0.85 and the face is likely to become a convex shape A4 when the coefficient is more than 0.95.

By setting the ratio W/WT and the ground contact face coefficient SF in the stated ranges respectively, a preferably shape A0 of ground contact face can be obtained.

As stated above, setting the ratios F1 and F2 in the above mentioned range N makes the tyre in the basic conditions have the preferred shape A0.

Furthermore by setting the ratio TO/T1 of the rubber thickness in the range M, the tyres in convex shape A4 or concave shape AB which may exist in the range N can be excluded.

Still furthermore by setting the ratio W/WT of the tyre width W to the nominal width WT in the range stated above, the tyres showing a hexagonal shape HC which may exist in the range N can be excluded.

Moreover by setting the ground contact face coefficient in the range explained above, the ground contact face becomes a more preferable shape.

Such preferable shapes are similar to the slice cut shape S, and they evenly and radially distribute the deformation around the border line of the ground contact face accompanying the rotation of the loaded tyre. They also even out the distribution of ground pressure, thereby preventing uneven wear caused by uneven distribution of ground pressure.

Furthermore the slip can be evened between the step in side of the ground contact face, that is, the front edge in the advancing direction and the kick out side on the opposite side, thereby preventing uneven wear caused by uneven slip.

Not only loss of wet grip properties can be prevented, but also steering stability can be maintained and uneven wear can be kept from occurring as stated above. Also polygonal abrasion can be prevented to keep better ride comfort if the inclinations are made when mounting on the car.

As apparent from the above explanation, the pneumatic tyre of the present invention has a tread face provided with two tread face radii, and the tread face radii are set in specific ranges in relation to the tyre width, thereby obtaining a ground contact face with a preferable shape. As a result an even distribution of the ground pressure, is obtained together with an even slip, that effectively prevents uneven wear including shoulder wear and rib punching. Accordingly, shortening of tread life is prevented and at the same time wet grip performance is provided and steering stability is furthermore enhanced.

The present invention applied to pneumatic tyres of various types and sizes, but more particularly to radial tyres for passenger cars.

**Claims**

1. A pneumatic tyre having a tread portion (4), a pair of bead portions (2) and a pair of sidewall portions (3) between said tread portion (4) and said bead portions (2), and comprising a pair of bead cores (5) disposed in said bead portions (2), a carcass (6) turned up at both edges thereof around said bead cores (5) to be secured thereto, and a belt (7) disposed radially outside said carcass (6) in the tread portion (4), the tread portion (4) having a first tread face radius (TR1) which is defined as the radius of an arc passing through a centre point (PO) defined as the intersection of the tread face with the equator (CO) of the tyre, and two closer points (P1) defined as points on the tread face spaced from said centre point by a first distance on each side of the centre point in the axial direction of the tyre, a second tread face radius (TR2) which is defined as the radius of an arc passing through said centre point (PO) and two distant points (P2) defined as points on the tread face spaced from said centre point by a second distance on each side of the centre point in the axial direction of the tyre, and a tyre width (W) defined as the maximum sectional width at the sidewall portions characterised in that the first distance (GW/4) is one quarter of the ground contacting width (GW) and the second distance (GW/2) is half of the ground contacting width (GW) and the sidewalls are arranged so that they satisfy the relation of L1≧F1≧L2 where

L1 = F2 x 4.3 − 2.46
L2 = F2 x 2.2 − 0.95

and
F1 is the ratio (TR1/W) of said first tread face radius (TR1) to said tyre width (W), and
F2 is the ratio (TR2/W) of said second tread face radius (TR2) to said tyre width (W).

2. A pneumatic tyre a set forth in claim 1, wherein said tread portion (4) includes a tread rubber between said tread face and the radially outer surface of said belt (7) characterised in that the rubber thickness (TO) of the tread rubber at said centre point (PO), the rubber thickness (T1) at said closer points (P1) and the rubber thickness (T2) at said distant points (P2) satisfy the relations:

0.95 ≤ TO/T1 ≤ 1.05 and
0.85 ≤ T2/R1 ≤ 1.05.

3. A pneumatic tyre as set forth in claim 1 or 2 characterised in that the ratio (W/WT) of the tyre width (W) to the nominal width (WT) of the tyre in the tyre size designation is not less than 0.97 and is not more than 1.03.

4. A pneumatic tyre as set forth in claim 1, 2 or 3 characterised in that a ground contact face coefficient (SF) defined as the ratio of the actual ground contact area (SA) of said tread face to the apparent ground contact area (GW x L) which is the product of the ground contact width (GW) in the axial direction of the tyre and the ground contact length (L) in the circumferential direction of the tyre is not less than 0.85 and is not more than 0.95.

**Patentansprüche**

1. Luftreifen mit einem Laufstreifenabschnitt (4), einem Paar Wulstabschnitten (2) und einem Paar Seitenwandabschnitten (3) zwischen dem Laufstreifenabschnitt (4) und Wulstabschnitten (2), sowie mit einem Paar in den Wulstabschnitten (2) angeordneten Wulstkernen, einer an ihren beiden Kanten um die Wulstkerne (5), um sie daran zu sichern, nach oben zurückgeschlagenen Karkasse (6) und einem radial außerhalb der Karkasse (6) im Laufstreifenabschnitt (4) angeordneten Gürtel (7), wobei der Laufstreifenabschnitt (4) besitzt einen ersten Laufflächenradius (TR1), der als der Radius eines durch den als den Überschneidungspunkt der Laufstreifenfläche mit dem Äquator (CO) des Reifens definierten Zentralpunkt (PO) und durch zwei nähere, als Punkte an der Laufstreifenfläche mit einem ersten Abstand von dem Zentralpunkt zu beiden Seiten des Zentralpunkts in Axialrichtung des Reifens definierte Punkte (P1) hindurchgehenden Bogens definiert ist, einen zweiten Laufflächenradius (TR2), der als der Radius eines durch den Zentralpunkt (PO) und zwei entferntere, als Punkte an der Laufstreifenfläche mit einem zweiten Abstand an jeder Seite des Zentralpunktes in Axialrichtung des Reifens von dem Zentralpunkt definierte Punkte (P2) hindurchgehenden Bogens definiert ist, und eine als die maximale Querschnittsbreite an den Seitenwandabschnitten definierte Reifenbreite (W), dadurch gekennzeichnet, daß der erste Abstand (GW/4) ein Viertel der Bodenaufstandsbreite (GW) und der zweite Abstand (GW/2) eine Hälfte der Bodenaufstandsbreite (GW) ist und daß die Seitenwände so angeordnet sind, daß sie die Beziehung erfüllen

L1 ≧ F1 ≧ L2,

wobei

L1 = F2 x 4,3 − 2,46,
L2 = F2 x 2,2 − 0,95

und F1 das Verhältnis (TR1/W) des ersten Laufflächenradius (TR1) zur Reifenbreite (W), und F2 das Verhältnis (TR2/W) des zweiten Laufflächenradius (TR2) zur Reifenbreite (W) ist.

2. Luftreifen nach Anspruch 1, bei dem der Laufstreifenabschnitt (4) einen Laufstreifengummi zwischen der Lauffläche und der radial äußeren Fläche des Gürtels (7) enthält, dadurch gekennzeichnet, daß die Gummidicke (TO) des Laufstreifengummis an dem Zentral‐punkt (PO), die Gummidikke (T1) an den nä‐heren Punkten (P1) und die Gummidicke (T2) an den entfernteren Punkten (P2) die Bezie‐hungen erfüllen:

$$0,95 \leq TO/T1 \leq 1,05 \text{ und}$$
$$0,85 \leq T2/R1 \leq 1,05.$$

3. Luftreifen nach Anspruch 1 oder 2, dadurch gekennzeichnet, daß das Verhältnis (W/WT) der Reifenbreite (W) zu der Nennbreite (WT) des Reifens in der Reifengrößenbezeichnung nicht kleiner als 0,97 und nicht größer als 1,03 ist.

4. Luftreifen nach einem der Ansprüche 1, 2 oder 3, dadurch gekennzeichnet, daß der als das Verhältnis der tatsächlichen Bodenberüh‐rungsfläche (SA) der Lauffläche zu der scheinbaren Bodenberührungsfläche (GW x L), die das Produkt der Bodenberührungsbreite (GW) in Axialrichtung des Reifens und der Bodenberührungslänge (in Umfangsrichtung des Reifens ist, definierte Bodenberührungsflächen‐Koeffizient (SF) nicht kleiner als 0,85 und nicht größer als 0,95 ist.

**Revendications**

1. Pneumatique ayant une partie (4) de bande de roulement, une paire de parties (2) de talon et une paire de parties (3) de flanc placées entre la partie (4) de bande de roulement et les parties (2) de talon, et comprenant une paire de tringles (5) placées dans les parties (2) de talon, une carcasse (6) repliée à ses deux bords autour des tringles (5) afin qu'elle soit fixée à celles‐ci, et une ceinture (7) placée radialement à l'extérieur de la carcasse (6) dans la partie (4) de bande de roulement, cette partie (4) de bande de roulement ayant un premier rayon (TR1) de face de bande de roulement qui est le rayon d'un arc passant par un point central (PO) qui se trouve à l'intersection de la face de la bande de roule‐ment avec l'équateur (CO) du pneumatique et deux points proches (P1) qui sont des points de la face de la bande de roulement séparés du point central par une première distance de part et d'autre du point central dans la direc‐tion axiale du pneumatique, un second rayon (TR2) de la face de la bande de roulement qui est le rayon d'un arc passant par le point central (PO) et deux points éloignés (P2) qui sont des points de la face de la bande de roulement qui sont séparés du point central par une seconde distance de part et d'autre du point central dans la direction axiale du pneu‐matique, et une largeur (W) du pneumatique définie comme étant la largeur maximale en coupe dans les parties des flancs, caractérisé en ce que la première distance (GW/4) est égale au quart de la largeur (GW) de contact avec le sol et la seconde distance (GW/2) est égale à la moitié de la largeur (GW) de contact avec le sol, et les flancs sont réalisés afin qu'ils remplissent les conditions suivantes

$$L1 \geq F1 \geq L2,$$

avec

$$L1 = F2 \times 4,3 - 2,46$$
$$L2 = F2 \times 2,2 - 0,95$$

F1 étant le rapport (TR1/W) du premier rayon (TR1) de la face de la bande de roulement et de la largeur (W) du pneumatique, et F2 étant le rapport (TR2/W) du second rayon (TR2) de la face de la bande de roulement et de la largeur (W) du pneumatique.

2. Pneumatique selon la revendication 1, dans lequel la partie (4) de bande de roulement comporte un caoutchouc de bande de roule‐ment placé entre la face de la bande de rou‐lement et la surface radialement externe de la ceinture (7), caractérisé en ce que l'épaisseur (TO) du caoutchouc de la bande de roulement au point central (PO), l'épaisseur (R) du caoutchouc aux points proches (P1) et l'épaisseur (T2) du caoutchouc aux points éloignés (P2) remplissent les conditions

$$0,95 \geq TO/T1 \geq 1,05$$
$$0,85 \geq T2/R1 \geq 1,05$$

3. Pneumatique selon la revendication 1 ou 2, caractérisé en ce que le rapport (W/WT) de la largeur (W) du pneumatique à sa largeur no‐minale (WT) correspondant à la désignation de taille n'est pas inférieur à 0,97 ni supérieur à 1,03.

4. Pneumatique selon la revendication 1, 2 ou 3, caractérisé en ce que le coefficient (SF) de la face de contact avec le sol qui est le rapport de la surface réelle (SA) de contact avec le sol de la face de la bande de roulement à la surface apparente (GW x L) de contact avec le sol qui est le produit de la largeur (GW) de contact avec le sol dans la direction axiale du pneumatique et de la longueur (L) de contact avec le sol dans la direction circonférentielle du pneumatique n'est pas inférieur à 0,85 et n'est pas supérieur à 0,95.

# FIG.1

# FIG.2

# FIG.3

# FIG.4

# FIG.5

# FIG.6

# FIG.7